# EUROPEAN PATENT SPECIFICATION

(11) **EP 3 637 897 B1**
(45) Date of publication and mention of the grant of the patent: **04.05.2022**
(21) Application number: 17920649.5
(22) Date of filing: 11.08.2017
(51) Int. Cl.: H04W 72/04

(54) **METHODS FOR PROCESSING SEMI PERSISTENT SCHEDULING AND COMMUNICATION DEVICE**
VERFAHREN ZUR VERARBEITUNG VON SEMIPERSISTENTER PLANUNG UND KOMMUNIKATIONSVORRICHTUNG
PROCÉDÉS DE TRAITEMENT D'ORDONNANCEMENT SEMI-PERSISTENT ET DISPOSITIF DE COMMUNICATION

(43) Date of publication of application: 15.04.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan, Guangdong 523860 (CN)
(74) Representative: Penza, Giancarlo
(86) International application number: PCT/CN2017/097235
(87) International publication number: WO 2019/028890

(56) References cited:
- EP-A1- 3 603 250
- WO-A1-2010/129617
- WO-A1-2017/078454
- WO-A2-2011/115389
- CN-A- 102 415 195
- CN-A- 102 468 940
- CN-A- 102 869 110
- CN-A- 106 160 983
- US-A1- 2010 111 026
- CATT: "Discussion on multiple SPS", 3GPP DRAFT; R2-1706370, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 26 June 2017 (2017-06-26), XP051300883, Retrieved from the Internet: URL:http://www.3gpp.org/ftp/Meetings_3GPP_ SYNC/RAN2/Docs/ [retrieved on 2017-06-26]

## Description

### Technical Field

The present application relates to the field of wireless communication, in particular to methods for processing semi persistent scheduling, SPS, and a communication device.

### Background

In a carrier aggregation scenario, a User Equipment (UE) may use multiple carriers for data transmission. The UE may use these carriers to transmit various service data, which may increase bandwidth and improve transmission rate. However, when multiple carriers are used simultaneously by the UE, a lot of control signaling will be received by the UE. As a result, on the one hand, signaling overhead is large, and on the other hand, the UE consumes a large amount of electric energy due to reception and demodulation of signaling, thus resulting in large electric energy consumption of the UE.

An example of prior art method is described in WO 2010/129617 A.

Relative technology is known from CN 106160983 A.

### Summary

In view of the above, the present invention as defined in the independent claims is expected to at least partially solve problems of large signaling overhead and/or large power consumption. Further improvements and embodiments are provided in the dependent claims.

The technical solutions provided by the implementations reduce signaling overhead and power consumption in various aspects, and have characteristics of lower signaling overhead, lower power consumption and longer standby time.

### Brief Description of Drawings

FIG. 1 is a schematic flowchart of a fist method for processing SPS provided by an implementation of the present application.
FIG. 2 is a schematic diagram of a piece of control information provided by an implementation of the present application.
FIG. 3 is a schematic diagram of another piece of control information provided by an implementation of the present application.
FIG. 4 is a schematic diagram of a medium access control (MAC) control element (CE) provided by an implementation of the present application.
FIG. 5 is a schematic flowchart of a second method for processing SPS provided by an implementation of the present application.
FIG. 6 is a schematic flowchart of a third method for processing SPS provided by an implementation of the present application.
FIG. 7 is a schematic structural diagram of a first communication device provided by an implementation of the present application.
FIG. 8 is a schematic structural diagram of a second communication device provided by an implementation of the present application.
FIG. 9 is a schematic structural diagram of a communication device provided by an implementation of the present application.

### Detailed Description

Below, preferred implementations of the present application will be described in detail with reference to accompanying drawings. It should be understood that the preferred implementations described below are only used to illustrate and explain the present application, and not used to limit the present application.

Before the present application is further described in detail, nouns and terms involved in implementations of the present application are explained, and the following explanations are applicable to the nouns and terms involved in the implementations of the present application.

SPS: the SPS is a scheduling mode of communication resources. Configuration information of the SPS may include parameters related to the SPS, and the configuration information of the SPS may include scheduling parameters such as an SPS scheduling period, a resource granularity of SPS resources corresponding to the SPS, and a semi persistent scheduling radio network temporary identifier (SPS-RNTI) for blindly detecting control information.

The resource granularity may include a frequency domain resource granularity and a time domain resource granularity. The frequency domain resource granularity is used for indicating a frequency domain minimum resource used during SPS data transmission corresponding to the SPS, for example, it may be a bandwidth in the frequency domain and a quantity of carriers in the frequency domain. The time domain resource granularity may be used for indicating a time domain minimum resource used during SPS data transmission corresponding to the SPS, and the time domain resource granularity may be a subframe, a slot or a transmission symbol, or the like.

The SPS may perform periodic scheduling by using the SPS scheduling period within a long duration. For example, in a scheduling process of the SPS, a base station is allowed to perform SPS configuration for a user equipment through higher layer signaling, and the SPS configuration is activated through control information of a physical layer to achieve a purpose of periodically allocating radio resources to a specific user equipment. It can be seen that SPS has a characteristic of scheduling once and usage for multiple transmissions. As such, indications of multiple transmissions are implemented through scheduling once. Compared with a dynamic scheduling of scheduling once per transmission, scheduling times are reduced and thus overhead of scheduling instructions is saved. Compared with a static scheduling, flexibility of scheduling communication resources can be increased.

SPS resource: the SPS resource is a semi persistent communication resource preconfigured through higher layer signaling such as Radio Resource Control (RRC) signaling, and the SPS resource may include a frequency domain resource and a time domain resource. The frequency domain resource may include a frequency band, a carrier, and a Resource Block (RB), and the time domain resource may include a transmission subframe, a transmission slot, a micro slot or a transmission symbol, or the like.

When a UE (also called a terminal) is connected to multiple cells, the cells to which the UE is connected may be divided at least into a primary cell and a secondary cell.

Primary Cell: the primary cell is also called a primary serving cell (Primary Cell, Pcell), and may be a cell that provides a primary frequency band for wireless communication to the UE.

Secondary cell: the secondary cell is also called a secondary serving cell, and may be a cell that provides a secondary frequency band for wireless communication to the UE.

Secondary cells may be divided into a first secondary cell (Second primary Cell, Spcell) and a second secondary Cell (Second Cell, Scell) other than the first secondary cell, according to importance degrees, usage status of signal instructions and secondary frequency bands, or the like.

Generally, carriers for wireless communication used by different cells are different.

Carrier: the carrier is also called a carrier frequency, and may be a radio spectrum with a specific width, and the carrier may be divided into multiple sub-carriers.

Control information: the control information may be information such as control signaling transmitted on a control channel, and the control signaling is used for scheduling communication resources or transmitting signaling information of a control plane.

The control channel may include: a physical downlink control channel, which may be a control channel for communication between a base station and a UE; and a physical sidelink control channel, which may be a control channel for communication between UEs that communicate by using a Sidelink.

Communication technologies of communication by using the Sidelink may include vehicle to Everything (V2X) communication. The V2X may include Vehicle to Vehicle (V2V) communication, Vehicle to Person (V2P) communication, and Vehicle to Infrastructure (V2I) communication.

The V2X includes multiple communication modes, for example, communication mode 2 and communication mode 3.

In the communication mode 2 of V2X, resources for communication between vehicle-mounted terminals are allocated by a base station, and a vehicle-mounted terminal sends data on a Sidelink according to the resources allocated by the base station; and the base station may allocate communication resources for a single transmission to the terminals or communication resources for semi persistent transmission to the terminals.

In the communication mode 3 of V2X, a vehicle-mounted terminal adopts a transmission mode of sensing and reservation. The vehicle-mounted terminal obtains a set of available transmission resources in a resource pool by sensing, and randomly selects one communication resource from the set for data transmission. As services in an Internet of Vehicles system have a periodic characteristic, the terminal usually perform a semi persistent transmission by adopting a semi persistent scheduling mode, that is, after selecting one transmission resource, the terminal will persistently use the communication resource in multiple transmission periods, thus reducing probabilities of resource re-selection and resource conflict. The terminal will carry information about a resource reserved for a next transmission in control channel information of a current transmission, so that other terminals may determine whether the resource is reserved and used by the terminal through detecting the control channel information sent by the terminal, thus achieving a purpose of reducing resource conflicts.

Data channel: the data channel is a channel for transmission of service data or other data in communication.

The data channel may include a physical uplink shared channel or a physical downlink shared channel in communication between a base station and a UE.

The data channel may further include a physical sidelink shared channel in V2X communication.

The above control information may be used for scheduling communication resources of the data channel and controlling data transmission of the data channel.

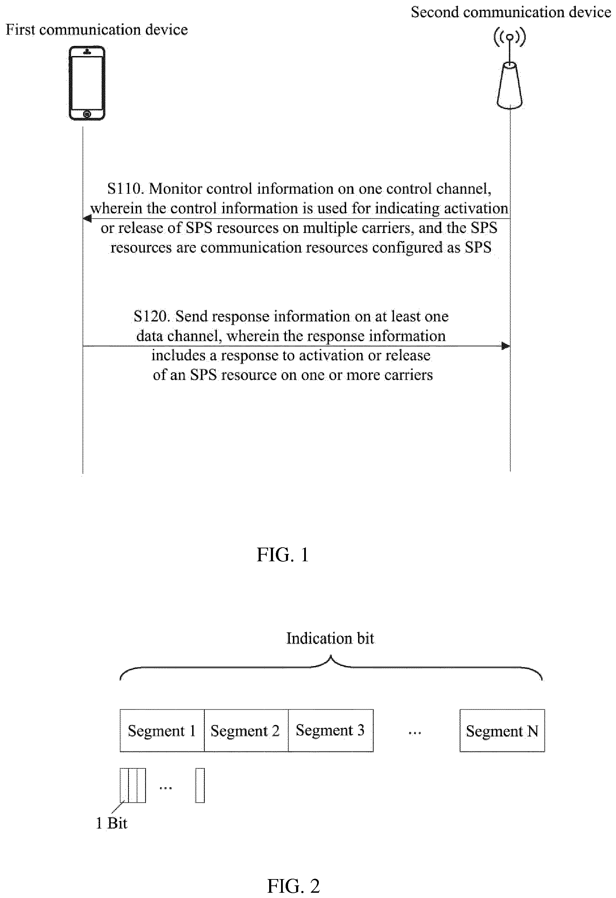

As shown in FIG. 1, an implementation provides a method for processing semi persistent scheduling (SPS). The method is applied to a first communication device and includes acts S110 to S120.

In act S 110, control information on one control channel is monitored, wherein the control information is used for indicating activation or release of SPS resources on multiple carriers, and the SPS resources are communication resources configured as SPS.

In act S120: response information is sent on at least one data channel, wherein the response information includes a response to activation or release of an SPS resource on one or more carriers.

The first communication device may be a UE. In act S110, the UE may only monitor control information on one control channel. The control information here may be downlink control information from a base station to the UE or physical sidelink control channel information between UEs.

In the implementation, by monitoring the control information on one control channel, an activation instruction for activating SPS resources or a release instruction may be extracted from the control information. The activation instruction is used for activating SPS scheduled communication resources, and SPS resources are utilized to transmit semi-persistently scheduled data based on an SPS period. The release instruction is used for releasing SPS scheduled communication resources, and occupation of corresponding SPS resources is released for occupation via other scheduling modes.

Therefore, in a first aspect, the first communication device firstly reduces signaling overhead generated by scheduling through the SPS scheduling compared to a dynamic scheduling, especially for a UE using multiple carriers, power consumed by monitoring scheduling information of frequent dynamic scheduling on multiple carriers of the UE may be reduced, thereby reducing power consumption of the UE and increasing a standby time length of the UE.

In a second aspect, the first communication device receives an instruction of activation or release of SPS resources on multiple carriers by monitoring on one control channel. Obviously, compared with receiving an instruction of activation or release of SPS resources on a control channel corresponding to each of the multiple carriers, pieces of transmitted control information are reduced, and thus pieces of signaling and signaling overhead are reduced. Furthermore, the first communication device is not required to monitor on each carrier, so that monitored carriers are reduced, power consumed by monitoring is reduced, and thus the power consumption is reduced.

In the implementation, a carrier corresponding to a control channel for sending the control information and a carrier corresponding to a data channel for sending the response information may be the same carrier or different carriers. Here, the carriers corresponding to the channels for sending the control information and the response information may be one of multiple carriers on which activation or release of SPS resources is performed, or may be a carrier other than the multiple carriers.

For example, when the UE is currently connected to multiple cells, carriers configured on different cells are different, and the multiple cells may include a primary cell, a first secondary cell, and at least one second secondary cell. Thus, in act S110, the first communication device may monitor a piece of the control information from a control channel of one of the primary cell, the first secondary cell and the second secondary cell. In act S120, a piece of the response information may be sent on one or more data channels of one of the primary cell and the first secondary cell.

The multiple carriers are all or part of carriers currently available to the UE. For example, if the UE is connected to 3 cells, a quantity of carriers currently available to the UE is 3. Here, the quantity of multiple carriers scheduled by the control information may be 3 or 2.

In the present application, it is not excluded that one cell may provide more than 2 carriers. The multiple carriers on which activation or release of SPS resources is uniformly indicated by the control information of one physical control channel in the implementation may be different carriers from the same cell.

In some implementations, the UE may be connected to y1 cells at the same time, and may communicate with other UEs via Sidelinks, the Sidelinks provide y2 carriers; then a quantity of carriers supported by the communication of the UE may be y1+y2; and the quantity of carriers on which SPS resources are uniformly activated or released by the current control information may be equal to or less than y1+y2.

The multiple carriers may be from different cells to which the UE is connected, and may be Sidelinks. The carriers may also be carriers corresponding to physical sidelinks of device-to-device communication in the V2X communication. Thus, in act S110, the first communication device monitors the control information on a control channel of a specific carrier. The specific carrier may be one carrier of the multiple carriers or a carrier other than the multiple carriers. For example, the control information is sent through a control channel of a macro cell to which the UE is connected, and the control information is used for controlling activation or release of SPS resources on carriers in all secondary cells to which the UE is connected. The secondary cell here may be one or more of the first secondary cell and the second secondary cells.

Optionally, the act S110 may include monitoring control information sent on a physical downlink control channel of one cell. The cell may be a primary cell, a first secondary cell or a second secondary cell, to which the UE is connected. In the implementation, the multiple cells may be all cells to which the UE is connected, or may be part of the all cells to which the UE is connected, that is, the multiple carriers on which activation or release of SPS resources are uniformly indicated, may be all carriers currently available to the UE, or may be part of carriers currently available to the UE.

For example, a quantity of carriers available to a UE is N, and the multiple carriers may be n of N carriers; the n is a positive integer less than N, and the N is a positive integer. For example, UE A is connected to 4 cells, and the N may be equal to a total quantity 4 of carriers provided by the 4 cells. In the implementation, the multiple carriers may be carriers provided by 4 cells or 3 cells, and may not necessarily be carriers provided by all cells connected to UE A.

In the implementation, the cell may be a macro cell formed by a macro base station, a small cell or a micro cell formed by a small base station. Multiple cells to which a UE is connected are not limited to the same type of cells, for example, all are macro cells or all are small cells. The multiple carriers may include carriers provided by cells such as a macro cell and one or more small cells.

In short, the act S110 may include monitoring control information sent on a control channel of one carrier, and the control information includes a physical downlink control channel or a physical sidelink control channel.

In a scenario of communication between a UE and a base station, the UE may be connected to multiple cells, the multiple cells provide different carriers, and SPS resources may be configured on the multiple carriers. A cell providing multiple carriers available for SPS may be one of a primary cell, a first secondary cell or a second secondary cell, to which the UE is connected.

In the communication mode 2 of V2X, a base station may use a physical sidelink control channel to activate or release SPS resources on multiple carriers of a physical sidelink shared channel.

In the communication mode 3 of V2X, one terminal may use a physical sidelink control channel to activate or release SPS resources on multiple carriers of a physical sidelink shared channel.

In the implementation, the UE only receives control information on a physical channel of one carrier.

When the control information is a physical downlink control channel, the corresponding communication scenario may be a scenario of communication between a base station and UE of non-V2X, or a communication scenario in the communication mode 2 of V2X.

When the control information is a physical sidelink control channel, the corresponding communication scenario may be a communication scenario in the communication mode 3 of V2X.

The physical downlink control channel may be a group common physical downlink control channel (a group common PDCCH) that transmits control information in a multicast mode, or a user equipment specific physical downlink control channel (a UE specific PDCCH) that transmits control information in a unicast mode.

As shown in FIG. 2, the control information may include an indication field, and the indication field includes N segments, the N may be a positive integer not less than 2, such as 2 or 3, etc. Each segment includes multiple bits. In some implementations, one carrier identifier is carried in each segment. The carrier identifier may be directly a carrier number or a carrier serial number of the corresponding carrier; or the carrier identifier may be a cell identifier of a cell to which the corresponding carrier belongs, for example, a cell number. Therefore, the act S110 may include monitoring control information carrying carrier identifiers of the multiple carriers on one control channel.

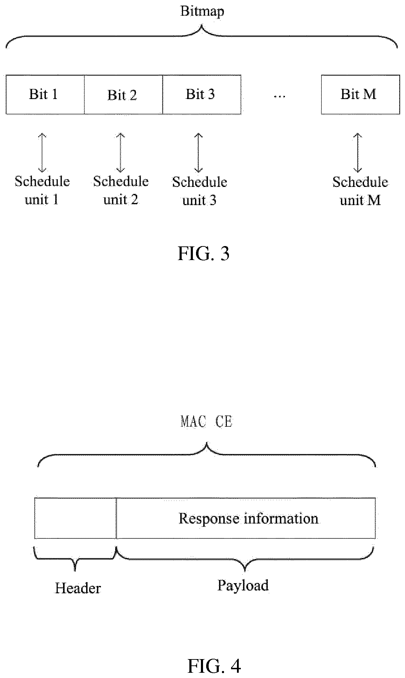

As shown in FIG. 3, the control information may include a bitmap formed of M bits. The M may be a positive integer not less than 2. One bit in the bitmap corresponds to one carrier. In an example shown in FIG. 3, bit 1 corresponds to carrier 1, bit 2 corresponds to carrier 2, and bit M corresponds to carrier M. Bit values of one bit may include "0" and "1" that may respectively correspond to two instructions of activation and release of SPS resources. Therefore, the act S110 may include: monitoring control information carrying a bitmap corresponding to the multiple carriers sent on one control channel.

In some implementations, if the bit value "0" indicates activation, then the bit value "1" indicates release; or, if the bit value "1" indicates activation, then the bit value "0" indicates release.

In some implementations, when the control information is physical downlink control channel information, an instruction to perform activation or release of SPS resources is carried in a New Data Indicator (NDI) field of Hybrid Automatic Repeat reQuest (HARQ). In the implementation, it is equivalent to performing activation or release of SPS resources for multiple cells at one time or performing activation or release of SPS resources for multiple carriers at one time through improvement or enhancement of scheduling signaling of SPS in the Long Term Evolution (LTE).

In some implementations not falling under the scope of protection of the present invention , the first communication device may directly perform activation or release operations on SPS resources on corresponding carriers according to monitored control information, and may not send a confirmation response or a denying response to a second communication device. The confirmation response here is a response indicating that a corresponding instruction is received and activation or release operation corresponding to the instruction will be executed. The denying response may be a response indicating that activation or release operation corresponding to the instruction will not be executed.

Therefore, in the implementation, the act S120 sends unified response information to activation or release of SPS resources on multiple carriers on one data channel (i.e., one carrier), or sends separate response information to activation or release of an SPS resource on each data channel (each carrier of multiple carriers) respectively. In short, the response information here may at least include the confirmation response mentioned above.

If response information is sent on only one data channel in act S120, the response information may be referred to as first response information. The first response information may be a unified response to activation or release of SPS resources on the multiple carriers. When receiving the first response information, the second communication device may know a reply or reception status of the first communication device for activation or release of SPS resources on the multiple carriers. The reception status here may be reception success or reception failure.

If response information is sent on each carrier of the multiple carriers in act S120, the response information is referred to as second response information. The second response information is separate response information to activation or release of an SPS resource on a single carrier. For example, by receiving control information, it is found that the second communication device such as a base station or another UE performs activation of an SPS resource on cell 1, then in this case, the first communication device may send separate response information for cell 1 on cell 1. After the separate second response information is received on cell 1, a current status of the first communication device may be known.

For example, an SPS resource is configured on carrier A. If received control information indicates activation of the SPS resource on carrier A, in the implementation, the first communication device may use carrier A itself to return response information to the second communication device. If the first communication device separately sends the second response information on each carrier of multiple carriers on which activation or release of SPS resources are required to be performed, in act S120, the first communication device may only send the second response information on a carrier on which activation or release of an SPS resource is confirmed to be performed, and may not send the second response information on a carrier on which activation or release of an SPS resource is abandoned to be performed, thus further reducing an amount of pieces of information sent by the first communication device and reducing signaling overhead. When the second communication device such as a base station or another UE does not receive the second response information on a corresponding carrier within a specified period of time, it is default that the first communication device does not execute an instruction of activation or release of the corresponding SPS resource.

In short, the act S120 may include: sending the first response information by using one data channel (e.g., one carrier of the multiple carriers); or, sending the second response information by using multiple data channels equal to the multiple carriers (e.g., each carrier of the multiple carriers).

Therefore, the method for processing SPS provided in the present application uses SPS to send control signaling, thus compared with a dynamic scheduling, signaling overhead and power consumption for a UE to monitor and blind detect control channel information are reduced due to change of the scheduling mode.

When sent response information is the first response information, activation or release of SPS resources on multiple carriers and response are completed at one time by using control information on one carrier and response information on one carrier. Compared with the indication and response of activation or release on each carrier one by one, signaling data received and sent is further reduced, thus the signaling overhead is further reduced, and the power consumption for receiving and sending signaling as well as decoding signaling of a UE is further reduced.

In the implementation, a carrier for transmitting control information of activation or release of SPS resources and a carrier for replying response information may be pre-negotiated between the first communication device and the second communication device, or selected according to a preset rule.

The response information may be information transmitted on various layers of communication, for example, Radio Link Control (RLC) information or Radio Resource Control (RRC) layer information. In the implementation, Media Access Control (MAC) information will be used to carry the response information. For example, if the response information is transmitted by using a MAC Control Element (CE) of the MAC layer, the act S120 may include: sending the MAC CE with a payload carrying the response information on at least one carrier. The MAC CE includes a payload which forms a body of the MAC CE, and response information is carried in the payload. As for how to specifically carry the response information, two options are provided below.

### Option 1

A MAC CE with a payload carrying carrier identifiers of multiple carriers is sent on one data channel.

In the implementation, an indication field may be set in the payload of the MAC CE, the indication field includes multiple segments which may be used for carrying carrier identifiers of multiple carriers, for example, information uniquely indicating a corresponding carrier, such as a cell identifier of a cell providing a corresponding carrier, or a carrier number or carrier serial number. If activation or release of an SPS resource is confirmed to be performed, a corresponding carrier identifier is carried in the response information; otherwise, the carrier identifier may not be carried.

In some implementations, the segment may be divided into two sub-segments, i.e., an identification sub-segment and an indication sub-segment. The identification sub-segment is used for carrying a carrier identifier, and the indication sub-segment is used for carrying an indication bit indicating whether activation or release of the SPS resource is to be performed. For example, if the identification sub-segment of field 1 carries an identifier of cell A, and the indication sub-segment of field 1 carries a confirmation indication, which indicates that activation or release of the SPS resource of cell A is confirmed to be performed.

### Option 2

A MAC CE with a payload carrying a bitmap corresponding to the multiple carriers is sent on one data channel.

One bit in the bitmap may correspond to one carrier, for example, carrier A corresponds to a fourth bit in the bitmap. Then after receiving the response information, the base station or another UE will determine whether the UE confirms to perform activation or releases of the SPS resource on carrier A according to a bit value of the fourth bit in the bitmap.

FIG. 4 shows a MAC CE provided in the implementation, which includes two parts, i.e., a header and a payload, and the payload carries response information.

The act S120 may include: on each carrier of the multiple carriers, a MAC CE carrying response information to activation or release of an SPS resource on a corresponding carrier is respectively sent.

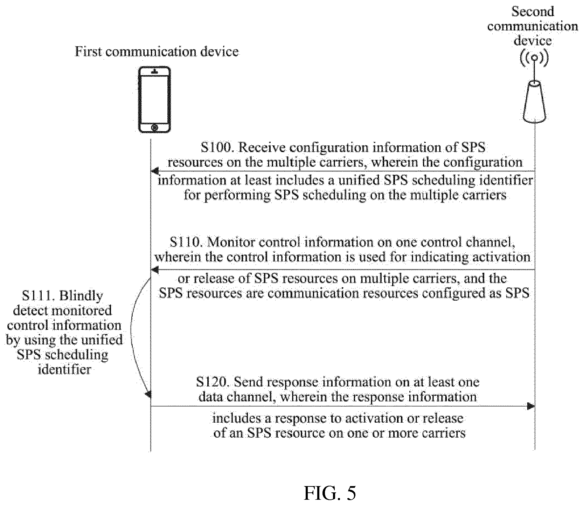

As shown in FIG. 5, the method further includes acts S100 to S111.

In act S100, configuration information of SPS resources on the multiple carriers is received, wherein the configuration information at least includes a unified SPS scheduling identifier for performing SPS scheduling on the multiple carriers.

In act Sill: monitored control information is blindly detected by using the unified SPS scheduling identifier.

In the implementation, the unified SPS scheduling identifier may be a unified identifier specially set for SPS scheduling on multiple carriers.

The unified SPS scheduling identifier may be a string or serial number having unique identification. In the implementation, it may be an SPS-RNTI, and the unified SPS scheduling identifier may be an SPS-RNTI-ALL. The SPS-RNTI-ALL is used for performing blind detection on control information indicating release or activation of SPS resources on multiple carriers simultaneously, and is different from the SPS-RNTI for blindly detecting control information indicating activation and release of an SPS resource on a single carrier only.

The unified SPS scheduling identifier may be used for a UE to perform blind detection on monitored control information. In the implementation, only one scheduling identifier is required to be used for blind detection of an instruction of activation or release of SPS resources on multiple carriers without separately setting one scheduling identifier for each carrier, thus reducing use of scheduling identifiers and consumption of identification resources.

Further, when the configuration information of the SPS includes the unified SPS scheduling identifier, the control information may use only one bit to indicate release or activation of SPS resources on all carriers. As such, the control channel only needs to use one bit, and the unified activation or release of SPS resources on multiple carriers supported by a UE may be accomplished through two states of the bit, thus further reducing signaling overhead.

In some implementations, of course, the indication bit carried by the control information may not be limited to one bit, may be two bits or more bits, and optionally may be less than the quantity of carriers participating in the current activation or release of SPS resources.

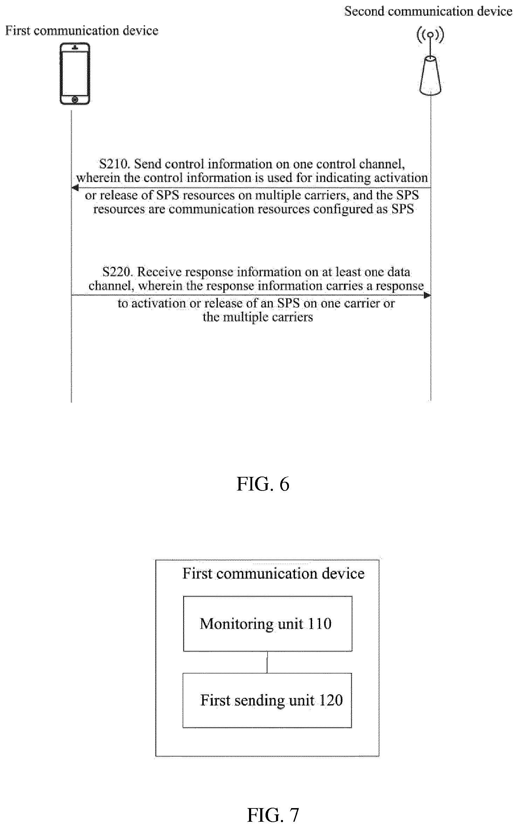

As shown in FIG. 6, a method for processing SPS is provide in the implementation, which is applied to a second communication device, and includes acts S210 to S220.

In act 210, control information is sent on one control channel, wherein the control information is used for indicating activation or release of SPS resources on multiple carriers, and the SPS resources are communication resources configured as SPS.

In act S220, response information is received on at least one data channel, wherein the response information carries a response to activation or release of an SPS resource on one carrier or the multiple carriers.

In the implementation, the second communication device may be a communication device capable of sending control information, and may be a base station, or a UE in V2X communication.

In act S210, when the second communication device indicates to the first communication device activation or release of SPS resources on multiple carriers, the second communication device uniformly issues activation or release of SPS resources on the multiple carriers by only using control information on a control channel of one carrier.

In act S220, the response information is received from one or more data channels, and the response information here is a response to activation or release of SPS resource(s).

Optionally, when a UE is connected to multiple cells and different cells correspond to different carriers, the SPS resources are configured on the multiple cells at which the UE is located. The multiple cells at least include: at least one second secondary cell other than a first secondary cell. The act S210 may include: sending control information on a physical downlink control channel of one cell. The act S220 may include: receiving response information on data channel(s) of one or more cells. For example, first response information for unified response to activation or release of SPS resources on multiple carriers is received on a data channel of one cell, or responses to release or activation of SPS resources on carriers of corresponding cells are received separately on respective data channels of multiple cells, that is, second response information is received.

Optionally, the act S210 may include sending control information by using control channel of one carrier; wherein the control channel includes a physical downlink control channel or a physical sidelink control channel. The act S220 may include: receiving first response information on a data channel of one carrier, wherein the first response information includes: a response to activation or release of SPS resources on the multiple carriers; or, receiving second response information on each carrier of the multiple carriers, wherein the second response information includes a response to activation or release of an SPS resource on one carrier. For example, in act S220, if the second response information is received on an n^{th} carrier, the second response information carried on the n^{th} carrier is a response to activation or release of an SPS resource on the n^{th} carrier.

Optionally, when the control channel is a physical downlink control channel, an operation indication is carried in an NDI field of hybrid automatic repeat request (HARQ) of the control information.

In some implementations, the method further includes: sending configuration information of the SPS resources on the multiple carriers, wherein the configuration information at least includes: a unified SPS scheduling identifier for performing SPS scheduling on the multiple carriers; and the unified SPS scheduling identifier is used for the first communication device to blindly detect monitored control information. Here, by issuing the configuration information, it may at least facilitate the first communication device to know the SPS resource configured on each carrier based on the configuration information. For example, the configuration information of the SPS resources is sent through broadcasting system information of a cell in a broadcast mode. For example, the configuration information of the SPS resources is broadcast or multicast through a physical downlink control channel.

In some implementations, if the sent configuration information of the SPS resources carries the same SPS scheduling identifier, the act S210 may include: sending an indication bit that indicates activation or release of SPS resources on multiple carriers on a control channel, and in this case, no carrier is needed to be indicated. The unified SPS scheduling identifier has a preset correspondence with the multiple carriers, and the correspondence has already been embodied in the configuration information of the SPS resources. For example, if the configuration information of the SPS resource of carrier A carries the unified SPS scheduling identifier, when blind detection performed by a UE on a corresponding control channel by using the unified SPS scheduling identifier is successful, the UE may extract one or more indication bits indicating activation or release of an SPS resource to activate or release the SPS resource on the carrier A.

In some implementations, the act S210 may include at least one of the following: sending control information carrying carrier identifiers of the multiple carriers by using a control channel of one carrier; and sending control information carrying a bitmap corresponding to the multiple carriers by using a control channel of one carrier.

Optionally, the act S220 may include: receiving a MAC CE with a payload carrying the response information on one or more carriers.

In the implementation, the MAC CE carries a payload, and response information is carried in the payload.

Optionally, the act S220 may include: receiving a MAC CE with a payload carrying first response information on one carrier, wherein the first response information includes a response to activation or release of SPS resources on the multiple carriers; or, receiving a MAC CE with a payload carrying second response information on each carrier, wherein the second response information includes a response to activation or release of an SPS resource on one carrier.

Optionally, a MAC CE with a payload carrying carrier identifiers of the multiple carriers is received on one carrier, or, a MAC CE with a payload carrying a bitmap corresponding to the multiple carriers is received on one carrier.

In an implementation, a confirmation response or a denying response is indicated by carrying a carrier identifier of a corresponding carrier. In another implementation, a confirmation response or a denying response is represented by a bitmap. In short, two options are provided in the implementation, and a specific implementation is not limited to any of the above.

As shown in FIG. 7, a communication device is provided in an implementation of the present application. The communication device is a first communication device, and includes a monitoring unit 110 and a first sending unit 120.

The monitoring unit 110 is configured to monitor control information on one control channel, wherein the control information is used for indicating activation or release of SPS resources on multiple carriers, and the SPS resources are semi persistent communication resources configured.

The first sending unit 120 is configured to send response information on at least one data channel, wherein the response information includes a response to activation or release of one or more SPS resources.

The first communication device may be various types of communication terminals, such as a mobile phone, a tablet computer or a vehicle-mounted terminal.

The monitoring unit 110 in the implementation may correspond to a receiving antenna of the first communication device, and obtains the control information by monitoring radio signals on the control channel.

The first sending unit 120 may correspond to a sending antenna of the first communication device, the sending antenna may be used for sending response information, and the response information may be sent on one or more carriers during the sending.

The monitoring unit 110 is configured to monitor a control channel of one carrier of the multiple carriers to obtain the control information; wherein the control channel includes: a physical downlink control channel or a physical sidelink control channel;

In some implementations, the first sending unit 120 is configured to send first response information by using one carrier of the multiple carriers; wherein the first response information includes a response to activation or release of SPS resources on the multiple carriers.

In some other implementations, the first sending unit 120 is configured to send second response information respectively by using each carrier of the multiple carriers, wherein the second response information on one carrier includes: a response to activation or release of an SPS resource on the carrier carrying the second response information.

Optionally, when the control channel is a physical downlink control channel, that is, when the control information is physical downlink control channel information, an instruction to activate or release SPS resources is carried in an NDI field of HARQ of the physical downlink control channel information. In the implementation, an instruction to activate or release SPS resources is carried by multiplexing the NDI field of HARQ.

In some implementations, the first communication device further includes: a first receiving unit, configured to receive configuration information of SPS resources on the multiple carriers, wherein the configuration information at least includes a unified SPS scheduling identifier for performing SPS scheduling on the multiple carriers.

Correspondingly, the monitoring unit 110 is configured to blindly detect monitored control information by using the unified SPS scheduling identifier.

In some implementations, the first sending unit 120 is configured to send a MAC CE with a payload carrying the response information on at least one carrier of the multiple carriers.

The monitoring unit 110 is configured to monitor control information carrying carrier identifiers of the multiple carriers on one carrier of the multiple carriers; or, monitor the control information carrying a bitmap corresponding to the multiple carriers on one carrier of the multiple carriers.

Optionally, the first sending unit 120 is configured to send a media access control (MAC) control element (CE) with a payload carrying the response information on at least one carrier of the multiple carriers.

For example, the first sending unit 120 may be configured to send a MAC CE with a payload carrying first response information on one carrier of the multiple carriers, wherein the first response information includes: a response to activation or release of SPS resources on the multiple carriers.

For another example, the first sending unit 120 may be further configured to send a MAC CE with a payload carrying second response information on each carrier of the multiple carriers, wherein the second response information includes: a response to activation or release of an SPS resource on one carrier.

When the MAC CE carries the first response information, carrier identifiers of the multiple carriers or a bitmap having a correspondence with the multiple carriers may be carried in the payload of the MAC CE.

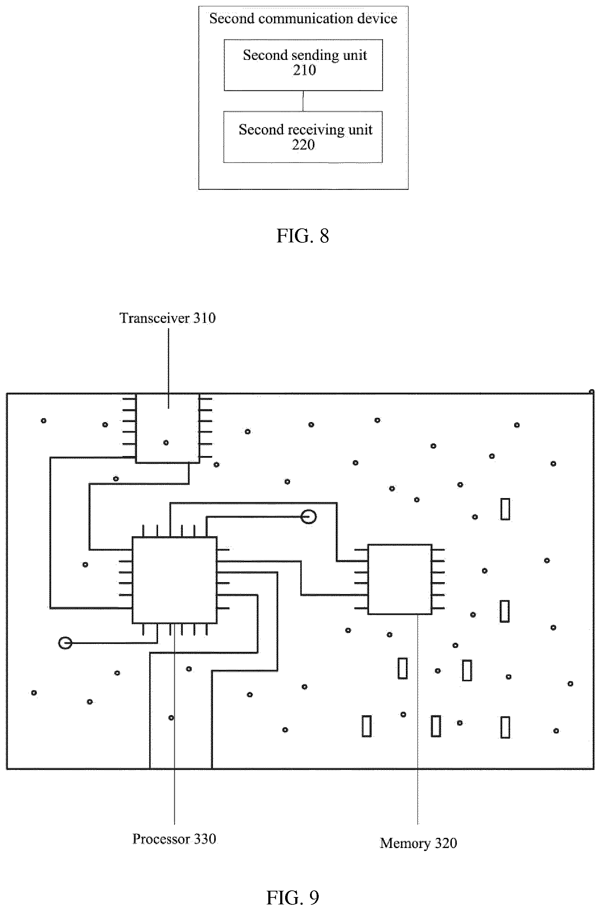

As shown in FIG. 8, a communication device is provided in the implementation, and the communication device is a second communication device, and includes a second sending unit 210 and a second receiving unit 220.

The second sending unit 210 is configured to send control information on one control channel, wherein the control information is used for indicating activation or release of SPS resources on multiple carriers, and the SPS resources are semi persistent communication resources configured.

The second receiving unit 220 is configured to receive response information on at least one carrier, wherein the response information carries a response to activation or release of the SPS resource on one or more carriers.

The second communication device may be a base station, for example, a next generation base station (gNB) in 5G communication, an evolved base station (eNB) in 3G or 4G communication, or other UE performing communication by using a Sidelink.

In the implementation, the second sending unit 210 corresponds to an antenna of the second communication device, and may be used for sending control information on one control channel to perform activation or release of SPS resources on multiple carriers.

The second sending unit 210 is configured to send control information by using a control channel of one carrier, wherein the control channel includes: a physical downlink control channel or a physical sidelink control channel.

The second receiving unit 220 may be configured to receive first response information on one carrier of the multiple carriers, wherein the first response information includes: a response to activation or release of SPS resources on the multiple carriers.

The second receiving unit 220 may be further configured to receive second response information on each carrier of the multiple carriers, wherein the second response information includes: a response to activation or release of an SPS resource on one carrier.

In some implementations, the second receiving unit 220 is configured to receive a MAC CE with a payload carrying the response information on at least one carrier.

The second receiving unit 220 may be configured to receive a media access control (MAC) control element (CE) with a payload carrying the response information on one or more carriers.

Optionally, the second receiving unit 220 may be configured to receive a MAC CE with a payload carrying carrier identifiers of the multiple carriers on one carrier; or, receive a MAC CE with a payload carrying a bitmap corresponding to the multiple carriers on one carrier.

Optionally, the second sending unit 210 is further configured to send configuration information of the SPS resources on multiple carriers before sending control information on a control channel of one carrier.

In some implementations, the configuration information of the SPS resources sent by the second sending unit 210 carries a unified SPS scheduling identifier; and the unified SPS scheduling identifier is used for the first communication device to blindly detect monitored control information. In this case, the control information sent by the second sending unit 210 carries an indication bit indicating unified release or unified activation of SPS resources on the multiple carriers, and the indication bit may be one or more bits.

As shown in FIG. 9, a communication device is provided in the implementation. The communication device includes: a transceiver 310, a memory 320, a processor 330, and a computer program 340 stored on the memory 320 and executed by the processor 330. The processor 330 is connected to the transceiver and the memory respectively, and is configured to, by executing the computer program, control information reception and transmission of the transceiver and information storage of the memory, and implement the methods for processing semi persistent scheduling (SPS) provided by one or more of technical solutions described above, for example, to perform the method for processing SPS applied in the first communication device and the method for processing SPS applied in the second communication device.

The transceiver 310 may include a transceiving antenna in a UE, or the like.

The memory 320 may include various types of storage media, such as a memory and a hard disk.

The processor 330 may be connected to the transceiver 310 and the memory 320 through a communication bus such as an integrated circuit (IIC) bus, and read the computer program stored on the memory 320 through the communication bus. The processor 330 sends control instructions to the transceiver 310 and the memory 320 through the communication bus, to control reception and transmission operations performed by the transceiver 310 and storage operations performed by the memory 320, and to perform the methods for processing SPS provided by one or more of the technical solutions described above.

The processor may be any one or a combination of more of a central processor, a microprocessor, a data signal processor, an application processor, a programmable array, or an application-specific integrated circuit.

The communication device provided in the implementation may be the first communication device or second communication device mentioned above. If the communication device is the first communication device, the first communication device may be various UEs. If the communication device is the second communication device, the second communication device may be a base station or a UE.

A computer storage medium is provided in the implementation, and the computer storage medium stores a computer program. After executed by a processor, the computer program may implement any one or more of the above methods for processing SPS applied in a first communication device, or any one or more of the above methods for processing SPS applied in a second communication device.

The computer storage medium may be: a mobile storage device, a read-only memory (ROM), a random access memory (RAM), a magnetic disk or optical disk, and other media capable of storing program codes.

The computer storage medium may be a non-transitory storage medium or a non-volatile storage medium.

Below, several specific examples are provided in connection with any of the above implementations.

### Example 1:

In this example, a network element, such as a base station at a network side, configures configuration information through RRC, such as a period of SPS, and then activate or release SPS resources through a physical layer (L1) signaling (PDCCH). Meanwhile, when receiving a PDCCH for activation or release, a terminal will send a confirmation MAC CE to the network side. In this example, the base station may activate or release SPS resources on all of a primary cell, a first secondary cell or a second secondary cell. A confirmation message of the terminal is also independently sent on different PCELL, SPCELL or SCELL respectively.

The terminal sends response information in response to activation or release of SPS resources. In New Radio (NR) corresponding to this example, as the SCELL also supports SPS function, it is necessary to enhance the above activation, release and confirmation. A payload is added to a MAC CE on one or more cells, and response information is carried by the payload. The response information here may be a confirmation response.

### Example 2:

A terminal receives parameters related with the SPS (including configuration information of SPS such as an SPS-RNTI, an SPS period, a HARQ process) configured on a SPCell by RRC information of a network. The parameters related with the SPS (including configuration information of SPS such as an SPS-RNTI, an SPS period, a HARQ process), an SPS scheduling identifier (ID), an SPS-RNTI may also be configured on a Scell.

The terminal receives control information sent by a PDCCH through the configured SPS-RNTI, and activates or releases the SPS resource on one or a group of cells according to the instruction carried in the control information. The process may include: the control information is sent on the physical downlink control channel (PDCCH), and the control information indicates activation or release of SPS resources on carriers of all cells to which the UE is connected.

A special RNTI may be configured for the control information of the PDCCH, such as SPS-RNTI-ALL (i.e., one of the above mentioned unified SPS-RNTI-ALL) corresponding to the SPS-RNTI. The terminal demodulates the control information of the PDCCH through the SPS-RNTI-ALL. The control information indicates activation or release of SPS resources on all cells to which the UE is connected. Or, an indication field is carried in downlink control information (DCI) of the PDCCH, for example, "ON/OFF", "ON" indicates that the control information of the PDCCH indicates activation or release of the SPS resources on all cells, and "OFF" indicates that the PDCCH only indicates activation or release of an SPS resource on one certain cell (i.e., the current cell).

The control information of the PDCCH is used for activation or release of SPS resources on a group of cells. The PDCCH may be configured with a special RNTI, such as SPS-RNTI-PARTIAL, and a field may be added in the PDCCH to indicate cell identifiers (IDs) of cells at which the PDCCH is aimed. An instruction to activate or release SPS resources may be carried in an NDI field in HARQ information of control information for activation or release of the SPS resources in the LTE.

When sending a MAC CE carrying response information, the terminal may send confirmation to activation or release of SPS resource(s) for one, part or all cells, on SPS resources of one certain cell. For example, a payload in MAC CE indicating all corresponding cell IDs for performing activation or release of SPS resources is used; or a payload in MAC CE which includes a bitmap is used. The quantity of bits included in the bitmap is equal to the quantity of all cells to which the UE is connected, and each bit in the bitmap indicates a confirmation message. When a bit value of the bit is "0", it indicates confirmation of release; when a bit value of the bit is "1", it indicates confirmation of activation. Activation means that corresponding SPS resource is occupied for data transmission of the SPS. Release means that the corresponding SPS resource is no longer occupied, and a state of the communication resource corresponding to the SPS resource is switched to an idle state, and the communication resource may be used for dynamic scheduling or the next SPS.

When a terminal sends a MAC CE carrying response information, if a carrier (such as a V2X sidelink carrier) can be configured with multiple SPS resources (such as 8 SPS resources), when the MAC CE is sent, the MAC CE is sent only on a corresponding carrier, that is, the MAC CE is sent on a carrier on which the terminal receives activation or release. In addition, confirmation information of activation or release of different SPS resources on one carrier corresponds to a bitmap respectively by carrying the bitmap in a payload, a bit value "0" of a corresponding bit corresponds to confirmation of release, and a bit value "1" of the corresponding bit corresponds to confirmation of activation.

In several implementations provided by the present application, it should be understood that disclosed devices and methods may be implemented in other ways. The device implementations described above are only illustrative, for example, a division of units is only a logical function division, and there may be other division manners in actual implementation. For example, multiple units or components may be combined or integrated into another system, or some features may be ignored or not executed. In addition, mutual coupling or direct coupling or communication connection between various components shown or discussed may be indirect coupling or communication connection through some interfaces, devices or units, and may be electrical, mechanical or in other forms.

Units described as separate components may or may not be physically separated, and the component shown as a unit may be or may not be a physical unit, i.e., it may be located in one place or may be distributed over multiple network units. Some or all of the units may be selected according to a practical requirement to achieve a purpose of the solution of the implementation.

In addition, various functional units in various implementations of the present application may be integrated in one processing module, or each unit may be separately presented as a unit, or two or more units may be integrated in one unit. The above-mentioned integrated units may be implemented in a form of hardware or in a form of hardware plus software functional units.

One of ordinary skill in the art may understand that, all or part of the acts for implementing the above method implementations may be accomplished by a program to instruct related hardware, and the aforementioned program may be stored in a computer readable storage medium. When the program is executed, acts including the above method implementations are performed.

### Industrial Applicability

In implementations of the present application, a first communication device that may use multiple carriers receives physical control information indicating activation or release of SPS resources on one control channel; thus the first communication device may accomplish activation or release of SPS resources on multiple carriers by only monitoring a piece of control information, therefore signaling overhead and power consumption for monitoring are reduced, and the present application has an advantageous industrial effect. In addition, various technical solutions in the implementations of the present application may be easily implemented by configuring computer executable instructions such as a computer program capable of executing specific functions in the first communication device and the second communication device, thus the present application has a characteristic of easy implementation, and can be repeatable and widely popularized in industry.

## Claims

1. A method for processing semi persistent scheduling, SPS, applied to a first communication device, comprising:
monitoring (S110) control information on one control channel, wherein the control information is used for indicating activation or release of SPS resources on a plurality of carriers, and the SPS resources are semi persistent communication resources configured (S110); and
sending (S120) response information on at least one data channel, wherein the response information comprises a response to activation or release of one or more SPS resources (S120);
wherein the control channel is a physical downlink control channel, and a new data indicator, NDI, field of hybrid automatic repeat request, HARQ, in the control information carries an instruction to activate or release the SPS resources on the plurality of carriers; wherein a bit value 0 of NDI indicates activation and a bit value 1 of NDI indicates release; or, a bit value 1 of NDI indicates activation and a bit value 0 of NDI indicates release.

2. The method of claim 1, wherein
monitoring (S110) the control information on the one control channel comprises:
monitoring a control channel on one carrier of the plurality of carriers to obtain the control information; wherein the control channel comprises the physical downlink control channel;
sending (S120) the response information on the at least one data channel comprises:
sending first response information by using one carrier of the plurality of carriers; wherein the first response information comprises a response to activation or release of the SPS resources on the plurality of carriers;
or,
sending second response information by using each carrier of the plurality of carriers respectively, wherein the second response information on one carrier comprises a response to activation or release of an SPS resource on the carrier carrying the second response information.

3. The method of claim 1 or 2, further comprising:
receiving (S100) configuration information of the SPS resources on the plurality of carriers, wherein the configuration information at least comprises a unified SPS scheduling identifier for scheduling the SPS resources on the plurality of carriers; and
detecting blindly the monitored control information by using the unified SPS scheduling identifier.

4. The method of claim 3, wherein
the control information comprises: at least one indication bit indicating unified activation or unified release of the SPS resources on the plurality of carriers.

5. The method of claim 1 or 2, wherein,
monitoring (S110) the control information on the one control channel comprises:
monitoring the control information carrying carrier identifiers of the plurality of carriers on the one control channel;
or,
monitoring the control information carrying a bitmap corresponding to the plurality of carriers on the one control channel.

6. The method of claim 1 or 2, wherein
sending (S120) the response information on at least one data channels comprises:
sending a media access control, MAC, control element, CE, on at least one carrier of the plurality of carriers, wherein the MAC CE comprises a payload, and the response information is carried in the payload.

7. The method of claim 6, wherein
sending the medium access control, MAC, control element, CE, on the at least one carrier of the plurality of carriers comprises:
sending the MAC CE with a payload carrying first response information on one carrier of the plurality of carriers, wherein the first response information comprises: a response to activation or release of the SPS resources on the plurality of carriers;
or,
sending the MAC CE with a payload carrying second response information on each carrier of the plurality of carriers respectively, wherein the second response information comprises: the second response information on one carrier comprising a response to activation or release of an SPS resource on the carrier carrying the second response information.

8. The method of claim 7, wherein,
sending the MAC CE with the payload carrying the first response information on the one carrier of the plurality of carriers, comprises at least one of the following:
sending the MAC CE with the payload carrying carrier identifiers of the plurality of carriers on the one carrier of the plurality of carriers; and
sending the MAC CE with the payload carrying a bitmap corresponding to the plurality of carriers on the one carrier of the plurality of carriers.

9. A method for processing semi persistent scheduling, SPS, applied to a second communication device, comprising:
sending (S210) control information on one control channel, wherein the control information is used for indicating activation or release of SPS resources on a plurality of carriers, and the SPS resources are semi persistent communication resources configured; and
receiving (S220) response information on at least one data channel, wherein the response information carries a response to activation or release of an SPS resource on one or more carriers;
wherein the control channel is a physical downlink control channel, and a new data indicator, NDI, field of hybrid automatic repeat request, HARQ, in the control information carries an instruction to activate or release the SPS resources on the plurality of carriers; wherein a bit value 0 of NDI indicates activation and a bit value 1 of NDI indicates release; or, a bit value 1 of NDI indicates activation and a bit value 0 of NDI indicates release.

10. The method of claim 9, wherein
sending (S210) control information on the one control channel comprises:
sending the control information by using a control channel of one carrier, wherein the control channel comprises the physical downlink control channel;
receiving (S220) response information on the at least one data channel comprises:
receiving first response information on one carrier of the plurality of carriers, wherein the first response information comprises: a response to activation or release of the SPS resources on the plurality of carriers; or,
receiving second response information on each carrier of the plurality of carriers, wherein the second response information comprises: a response to activation or release of an SPS resource on one carrier.

11. A communication device, the communication device being a first communication device, and comprising:
a monitoring unit (110), configured to monitor control information on one control channel, wherein the control information is used for indicating activation or release of SPS resources on a plurality of carriers, and the SPS resources are semi persistent communication resources configured; and
a first sending unit (120), configured to send response information on at least one data channel, wherein the response information comprises a response to activation or release of one or more SPS resources;
wherein the control channel is a physical downlink control channel, and a new data indicator, NDI, field of hybrid automatic repeat request, HARQ, in the control information carries an instruction to activate or release the SPS resources on the plurality of carriers; wherein a bit value 0 of NDI indicates activation and a bit value 1 of NDI indicates release; or, a bit value 1 of NDI indicates activation and a bit value 0 of NDI indicates release.

12. The communication device of claim 11, wherein
the monitoring unit (110) is configured to monitor a control channel on one carrier of the plurality of carriers to obtain the control information; wherein the control channel comprises the physical downlink control channel; and
the first sending unit (120) is configured to send first response information by using one carrier of the plurality of carriers; wherein the first response information comprises a response to activation or release of the SPS resources on the plurality of carriers; or, send second response information by using each carrier of the plurality of carriers respectively, wherein the second response information on one carrier comprises a response to activation or release of an SPS resource on the carrier carrying the second response information.

13. The communication device of claim 11, further comprising:
a first receiving unit, configured to receive configuration information of the SPS resources on the plurality of carriers, wherein the configuration information at least comprises: a unified SPS scheduling identifier for scheduling the plurality of SPS resources on the plurality of carriers;
wherein the monitoring unit (110) is configured to blindly detect the monitored control information by using the unified SPS scheduling identifier.

14. The communication device of any one of claims 11 to 13, wherein,
the first sending unit (120) is configured to send a media access control, MAC, control element, CE, on at least one carrier of the plurality of carriers, wherein the MAC CE comprises a payload, and the response information is carried in the payload.

## Patentansprüche

1. Verfahren zur Verarbeitung von semipersistenter Disposition, SPS, das auf eine erste Kommunikationsvorrichtung angewendet wird und umfasst:
Überwachen (S110) von Steuerinformationen auf einem Steuerkanal, wobei die Steuerinformationen zum Anzeigen von Aktivierung oder Freigabe von SPS-Ressourcen auf einer Mehrzahl von Trägern verwendet werden, und die SPS-Ressourcen semipersistente Kommunikationsressourcen sind, die konfiguriert sind (S110); und
Senden (S120) von Antwortinformationen auf mindestens einem Datenkanal, wobei die Antwortinformationen eine Antwort auf eine Aktivierung oder Freigabe einer oder mehrerer SPS-Ressourcen umfassen (S120);
wobei der Steuerkanal ein physikalischer Downlink-Steuerkanal ist, und ein Feld Neuer Datenindikator, NDI, einer hybriden automatischen Wiederholungsanforderung, HARQ, in den Steuerinformationen eine Anweisung zum Aktivieren oder Freigeben der SPS-Ressourcen auf der Mehrzahl von Trägern überträgt; wobei ein Bitwert 0 von NDI Aktivierung anzeigt, und ein Bitwert 1 von NDI Freigabe anzeigt; oder ein Bitwert 1 von NDI Aktivierung anzeigt, und ein Bitwert 0 von NDI Freigabe anzeigt.

2. Verfahren nach Anspruch 1, wobei
das Überwachen (S110) der Steuerinformationen auf dem einen Steuerkanal umfasst:
Überwachen eines Steuerkanals auf einem Träger der Mehrzahl von Trägern, um die Steuerinformationen zu erhalten; wobei der Steuerkanal den physikalischen Downlink-Steuerkanal umfasst;
das Senden (S120) der Antwortinformationen auf dem mindestens einen Datenkanal umfasst:
Senden von ersten Antwortinformationen durch Verwenden eines Trägers der Mehrzahl von Trägern; wobei die ersten Antwortinformationen eine Antwort auf eine Aktivierung oder Freigabe der SPS-Ressourcen auf der Mehrzahl von Trägern umfassen; oder
Senden von zweiten Antwortinformationen durch jeweiliges Verwenden jedes Trägers der Mehrzahl von Trägern, wobei die zweiten Antwortinformationen auf einem Träger eine Antwort auf eine Aktivierung oder Freigabe einer SPS-Ressource auf dem Träger umfassen, der die zweiten Antwortinformationen überträgt.

3. Verfahren nach Anspruch 1 oder 2, ferner umfassend:
Empfangen (S100) von Konfigurationsinformationen der SPS-Ressourcen auf der Mehrzahl von Trägern, wobei die Konfigurationsinformationen mindestens eine vereinheitlichte SPS-Dispositionskennung zum Disponieren der SPS-Ressourcen auf der Mehrzahl von Trägern umfassen; und
blindes Detektieren der überwachten Steuerinformationen durch Verwenden der vereinheitlichten SPS-Dispositionskennung.

4. Verfahren nach Anspruch 3, wobei
die Steuerinformationen umfassen: mindestens ein Anzeigebit, das vereinheitlichte Aktivierung oder vereinheitlichte Freigabe der SPS-Ressourcen auf der Mehrzahl von Trägern anzeigt.

5. Verfahren nach Anspruch 1 oder 2, wobei
das Überwachen (S110) der Steuerinformationen auf dem einen Steuerkanal umfasst:
Überwachen der Steuerinformationen, die Trägerkennungen der Mehrzahl von Trägern auf dem einen Steuerkanal übertragen;
oder
Überwachen der Steuerinformationen, die eine Bitmap, die der Mehrzahl von Trägern entspricht, auf dem einen Steuerkanal übertragen.

6. Verfahren nach Anspruch 1 oder 2, wobei
das Senden (S120) der Antwortinformationen auf mindestens einem Datenkanal umfasst:
Senden eines Medienzugriffssteuerungs-, MAC-, Steuerelements, CE, auf mindestens einem Träger der Mehrzahl von Trägern, wobei das MAC-CE eine Nutzlast umfasst, und die Antwortinformationen in der Nutzlast übertragen werden.

7. Verfahren nach Anspruch 6, wobei
das Senden des Medienzugriffssteuerungs-, MAC-, Steuerelements, CE, auf dem mindestens einen Träger der Mehrzahl von Trägern umfasst:
Senden des MAC-CE mit einer Nutzlast, die erste Antwortinformationen überträgt, auf einem Träger der Mehrzahl von Trägern, wobei die ersten Antwortinformationen umfassen: eine Antwort auf eine Aktivierung oder Freigabe der SPS-Ressourcen auf der Mehrzahl von Trägern;
oder
jeweiliges Senden des MAC-CE mit einer Nutzlast, die zweite Antwortinformationen überträgt, auf jedem Träger der Mehrzahl von Trägern, wobei die zweiten Antwortinformationen umfassen: die zweiten Antwortinformationen auf einem Träger, die eine Antwort auf eine Aktivierung oder Freigabe einer SPS-Ressource auf dem Träger umfassen, der die zweiten Antwortinformationen überträgt.

8. Verfahren nach Anspruch 7, wobei
das Senden des MAC-CE mit der Nutzlast, welche die ersten Antwortinformationen überträgt, auf dem einen Träger der Mehrzahl von Trägern mindestens eines von Folgendem umfasst:
Senden des MAC-CE mit der Nutzlast, die Trägerkennungen der Mehrzahl von Trägern überträgt, auf dem einen Träger der Mehrzahl von Trägern; und
Senden des MAC-CE mit der Nutzlast, die eine Bitmap überträgt, die der Mehrzahl von Trägern entspricht, auf dem einen Träger der Mehrzahl von Trägern.

9. Verfahren zur Verarbeitung von semipersistenter Disposition, SPS, das auf eine zweite Kommunikationsvorrichtung angewendet wird und umfasst:
Senden (S210) von Steuerinformationen auf einem Steuerkanal, wobei die Steuerinformationen zum Anzeigen von Aktivierung oder Freigabe von SPS-Ressourcen auf einer Mehrzahl von Trägern verwendet werden, und die SPS-Ressourcen semipersistente Kommunikationsressourcen sind, die konfiguriert sind; und
Empfangen (S220) von Antwortinformationen auf mindestens einem Datenkanal, wobei die Antwortinformationen eine Antwort auf eine Aktivierung oder Freigabe einer SPS-Ressource auf einem oder mehreren Trägern übertragen;
wobei der Steuerkanal ein physikalischer Downlink-Steuerkanal ist, und ein Feld Neuer Datenindikator, NDI, einer hybriden automatischen Wiederholungsanforderung, HARQ, in den Steuerinformationen eine Anweisung zum Aktivieren oder Freigeben der SPS-Ressourcen auf der Mehrzahl von Trägern überträgt; wobei ein Bitwert 0 von NDI Aktivierung anzeigt, und ein Bitwert 1 von NDI Freigabe anzeigt; oder ein Bitwert 1 von NDI Aktivierung anzeigt, und ein Bitwert 0 von NDI Freigabe anzeigt.

10. Verfahren nach Anspruch 9, wobei
das Senden (S210) von Steuerinformationen auf dem einen Steuerkanal umfasst:
Senden der Steuerinformationen durch Verwenden eines Steuerkanals eines Trägers, wobei der Steuerkanal den physikalischen Downlink-Steuerkanal umfasst;
das Empfangen (S220) von Antwortinformationen auf dem mindestens einen Datenkanal umfasst:
Empfangen von ersten Antwortinformationen auf einem Träger der Mehrzahl von Trägern, wobei die ersten Antwortinformationen umfassen: eine Antwort auf eine Aktivierung oder Freigabe der SPS-Ressourcen auf der Mehrzahl von Trägern;
oder
Empfangen von zweiten Antwortinformationen auf jedem Träger der Mehrzahl von Trägern, wobei die zweiten Antwortinformationen umfassen: eine Antwort auf eine Aktivierung oder Freigabe der SPS-Ressourcen auf einem Träger.

11. Kommunikationsvorrichtung, wobei die Kommunikationsvorrichtung eine erste Kommunikationsvorrichtung ist und umfasst:
eine Überwachungseinheit (110), die zum Überwachen von Steuerinformationen auf einem Steuerkanal konfiguriert ist, wobei die Steuerinformationen zum Anzeigen von Aktivierung oder Freigabe von SPS-Ressourcen auf einer Mehrzahl von Trägern verwendet werden, und die SPS-Ressourcen semipersistente Kommunikationsressourcen sind, die konfiguriert sind; und
eine erste Sendeeinheit (120), die zum Senden von Antwortinformationen auf mindestens einem Datenkanal konfiguriert ist, wobei die Antwortinformationen eine Antwort auf eine Aktivierung oder Freigabe einer oder mehrerer SPS-Ressourcen umfassen;
wobei der Steuerkanal ein physikalischer Downlink-Steuerkanal ist, und ein Feld Neuer Datenindikator, NDI, einer hybriden automatischen Wiederholungsanforderung, HARQ, in den Steuerinformationen eine Anweisung zum Aktivieren oder Freigeben der SPS-Ressourcen auf der Mehrzahl von Trägern überträgt; wobei ein Bitwert 0 von NDI Aktivierung anzeigt, und ein Bitwert 1 von NDI Freigabe anzeigt; oder ein Bitwert 1 von NDI Aktivierung anzeigt, und ein Bitwert 0 von NDI Freigabe anzeigt.

12. Kommunikationsvorrichtung nach Anspruch 11, wobei
die Überwachungseinheit (110) so konfiguriert ist, dass sie einen Steuerkanal auf einem Träger der Mehrzahl von Trägern überwacht, um die Steuerinformationen zu erhalten; wobei der Steuerkanal den physikalischen Downlink-Steuerkanal umfasst; und
wobei die erste Sendeeinheit (120) so konfiguriert ist, dass sie erste Antwortinformationen durch Verwenden eines Trägers der Mehrzahl von Trägern sendet; wobei die ersten Antwortinformationen eine Antwort auf eine Aktivierung oder Freigabe der SPS-Ressourcen auf der Mehrzahl von Trägern umfassen; oder zweite Antwortinformationen durch jeweiliges Verwenden jedes Trägers der Mehrzahl von Trägern sendet, wobei die zweiten Antwortinformationen auf einem Träger eine Antwort auf eine Aktivierung oder Freigabe einer SPS-Ressource auf dem Träger umfassen, der die zweiten Antwortinformationen überträgt.

13. Kommunikationsvorrichtung nach Anspruch 11, ferner umfassend:
eine erste Empfangseinheit, die zum Empfangen von Konfigurationsinformationen der SPS-Ressourcen auf der Mehrzahl von Trägern konfiguriert ist, wobei die Konfigurationsinformationen mindestens umfassen: eine vereinheitlichte SPS-Dispositionskennung zum Disponieren der SPS-Ressourcen auf der Mehrzahl von Trägern; und
wobei die Überwachungseinheit (110) so konfiguriert ist, dass sie die überwachten Steuerinformationen durch Verwenden der vereinheitlichten SPS-Dispositionskennung blind detektiert.

14. Kommunikationsvorrichtung nach einem der Ansprüche 11 bis 13, wobei
die erste Sendeeinheit (120) zum Senden eines Medienzugriffssteuerungs-, MAC-, Steuerelements, CE, auf mindestens einem Träger der Mehrzahl von Trägern konfiguriert ist, wobei das MAC-CE eine Nutzlast umfasst, und die Antwortinformationen in der Nutzlast übertragen werden.

## Revendications

1. Procédé de traitement d'une programmation semi-persistante, SPS, appliqué à un premier dispositif de communication, comprenant les étapes consistant à :
surveiller (S110) des informations de commande sur un canal de commande, les informations de commande étant utilisés pour indiquer l'activation ou la libération de ressources SPS sur une pluralité de porteuses, et les ressources SPS étant des ressources de communication semi-persistantes configurées (S110) ; et
envoyer (S120) des informations de réponse sur au moins un canal de données, les informations de réponse comprenant une réponse à l'activation ou à la libération d'une ou plusieurs ressources SPS (S120) ;
dans lequel le canal de commande est un canal de commande de liaison descendante physique, et un champ indicateur de nouvelles données, NDI, de demande de répétition automatique hybride, HARQ, situé dans les informations de commande transporte une instruction permettant d'activer ou de libérer les ressources SPS sur la pluralité de porteuses ; une valeur de bit 0 du NDI indiquant l'activation et une valeur de bit 1 du NDI indiquant la libération ; ou une valeur de bit 1 du NDI indiquant l'activation et une valeur de bit 0 du NDI indiquant la libération.

2. Procédé selon la revendication 1, dans lequel
la surveillance (S110) des informations de commande sur ledit un canal de commande comprend l'étape consistant à :
surveiller un canal de commande sur une porteuse de la pluralité de porteuses pour obtenir les informations de commande ; le canal de commande comprenant le canal de commande de liaison descendante physique ;
l'envoi (S120) des informations de réponse sur ledit au moins un canal de données comprend l'étape consistant à :
envoyer des premières informations de réponse en utilisant une porteuse de la pluralité de porteuses ; les premières informations de réponse comprenant une réponse à l'activation ou à la libération des ressources SPS sur la pluralité de porteuses ;
ou,
envoyer des deuxièmes informations de réponse en utilisant chaque porteuse de la pluralité de porteuses respectivement, les deuxièmes informations de réponse sur une porteuse comprenant une réponse à l'activation ou à la libération d'une ressource SPS sur la porteuse transportant les deuxièmes informations de réponse.

3. Procédé selon la revendication 1 ou 2, comprenant également les étapes consistant à :
recevoir (S100) des informations de configuration des ressources SPS sur la pluralité de porteuses, les informations de configuration comprenant au moins un identifiant de programmation SPS unifié pour la programmation des ressources SPS sur la pluralité de porteuses ; et
détecter de manière aveugle les informations de commande surveillées en utilisant l'identifiant de programmation SPS unifié.

4. Procédé selon la revendication 3, dans lequel les informations de commande comprennent : au moins un bit d'indication indiquant l'activation unifiée ou la libération unifiée des ressources SPS sur la pluralité de porteuses.

5. Procédé selon la revendication 1 ou 2, dans lequel,
la surveillance (S110) des informations de commande sur ledit un canal de commande comprend l'étape consistant à :
surveiller les informations de commande transportant les identifiants de porteuse de la pluralité de porteuses sur ledit un canal de commande ;
ou,
surveiller les informations de commande transportant une table de bits correspondant à la pluralité de porteuses sur ledit un canal de commande.

6. Procédé selon la revendication 1 ou 2, dans lequel
l'envoi (S120) des informations de réponse sur au moins un des canaux de données comprend l'étape consistant à :
envoyer un élément de commande, CE, de contrôle d'accès au support, MAC, sur au moins une porteuse de la pluralité de porteuses, le CE MAC comprenant une charge utile, et les informations de réponse étant transportées dans la charge utile.

7. Procédé selon la revendication 6, dans lequel l'envoi d'un élément de commande, CE, de contrôle d'accès au support, MAC, sur ladite au moins une porteuse de la pluralité de porteuses comprend l'étape consistant à :
envoyer le CE MAC avec une charge utile transportant des premières informations de réponse sur une porteuse de la pluralité de porteuses, les premières informations de réponse comprenant : une réponse à l'activation ou à la libération des ressources SPS sur la pluralité de porteuses ;
ou,
envoyer le CE MAC avec une charge utile transportant des deuxièmes informations de réponse sur chaque porteuse de la pluralité de porteuses respectivement, les deuxièmes informations de réponse comprenant : les deuxièmes informations de réponse sur une porteuse comprenant une réponse à l'activation ou à la libération d'une ressource SPS sur la porteuse transportant les deuxièmes informations de réponse.

8. Procédé selon la revendication 7, dans lequel, l'envoi du CE MAC avec la charge utile transportant les premières informations de réponse sur ladite une porteuse de la pluralité de porteuses comprend au moins une des étapes suivantes consistant à :
envoyer le CE MAC avec la charge utile transportant des identifiants de porteuse de la pluralité de porteuses sur ladite une porteuse de la pluralité de porteuses ; et
envoyer le CE MAC avec la charge utile transportant une table de bits correspondant à la pluralité de porteuses sur ladite une porteuse de la pluralité de porteuses.

9. Procédé de traitement d'une programmation semi-persistante, SPS, appliqué à un deuxième dispositif de communication, comprenant les étapes consistant à :
envoyer (S210) des informations de commande sur un canal de commande, les informations de commande étant utilisés pour indiquer l'activation ou la libération de ressources SPS sur une pluralité de porteuses, et les ressources SPS étant des ressources de communication semi-persistantes configurées ; et
recevoir (S220) des informations de réponse sur au moins un canal de données, les informations de réponse transportant une réponse à l'activation ou à la libération d'une ressource SPS sur une ou plusieurs porteuses ;
dans lequel le canal de commande est un canal de commande de liaison descendante physique, et un champ indicateur de nouvelles données, NDI, de demande de répétition automatique hybride, HARQ, situé dans les informations de commande transporte une instruction permettant d'activer ou de libérer les ressources SPS sur la pluralité de porteuses ; une valeur de bit 0 du NDI indiquant l'activation et une valeur de bit 1 du NDI indiquant la libération ; ou une valeur de bit 1 du NDI indiquant l'activation et une valeur de bit 0 du NDI indiquant la libération.

10. Procédé selon la revendication 9, dans lequel l'envoi (S210) des informations de commande sur ledit un canal de commande comprend l'étape consistant à :
envoyer les informations de commande en utilisant un canal de commande d'une porteuse, le canal de commande comprenant le canal de commande de liaison descendante physique ;
la réception (S220) des informations de réponse sur ledit au moins un canal de données comprend l'étape consistant à :
recevoir des premières informations de réponse sur une porteuse de la pluralité de porteuses, les premières informations de réponse comprenant : une réponse à l'activation ou à la libération des ressources SPS sur la pluralité de porteuses ;
ou,
recevoir des deuxièmes informations de réponse sur chaque porteuse de la pluralité de porteuses, les deuxièmes informations de réponse comprenant : une réponse à l'activation ou à la libération d'une ressource SPS sur une porteuse.

11. Dispositif de communication, le dispositif de communication étant un premier dispositif de communication, et comprenant :
une unité de surveillance (110), configurée pour surveiller des informations de commande sur un canal de commande, les informations de commande étant utilisés pour indiquer l'activation ou la libération de ressources SPS sur une pluralité de porteuses, et les ressources SPS étant des ressources de communication semi-persistantes configurées ; et
une première unité d'envoi (120), configurée pour envoyer des informations de réponse sur au moins un canal de données, les informations de réponse comprenant une réponse à l'activation ou à la libération d'une ou plusieurs ressources SPS ;
dans lequel le canal de commande est un canal de commande de liaison descendante physique, et un champ indicateur de nouvelles données, NDI, de demande de répétition automatique hybride, HARQ, situé dans les informations de commande transporte une instruction permettant d'activer ou de libérer les ressources SPS sur la pluralité de porteuses ; une valeur de bit 0 du NDI indiquant l'activation et une valeur de bit 1 du NDI indiquant la libération ; ou une valeur de bit 1 du NDI indiquant l'activation et une valeur de bit 0 du NDI indiquant la libération.

12. Dispositif de communication selon la revendication 11, dans lequel
l'unité de surveillance (110) est configurée pour surveiller un canal de commande sur une porteuse de la pluralité de porteuses pour obtenir les informations de commande ; le canal de commande comprenant le canal de commande de liaison descendante physique ; et
la première unité d'envoi (120) est configurée pour envoyer des premières informations de réponse en utilisant une porteuse de la pluralité de porteuses ; les premières informations de réponse comprenant une réponse à l'activation ou à la libération des ressources SPS sur la pluralité de porteuses ; ou, pour envoyer des deuxièmes informations de réponse en utilisant chaque porteuse de la pluralité de porteuses respectivement, les deuxièmes informations de réponse sur une porteuse comprenant une réponse à l'activation ou à la libération d'une ressource SPS sur la porteuse transportant les deuxièmes informations de réponse.

13. Dispositif de communication selon la revendication 11, comprenant également :
une première unité de réception, configurée pour recevoir des informations de configuration des ressources SPS sur la pluralité de porteuses, les informations de configuration comprenant au moins : un identifiant de programmation SPS unifié pour la programmation des ressources SPS sur la pluralité de porteuses ;
dans lequel l'unité de surveillance (110) est configurée pour détecter de manière aveugle les informations de commande surveillées en utilisant l'identifiant de programmation SPS unifié.

14. Dispositif de communication selon l'une quelconque des revendications 11 à 13, dans lequel
la première unité d'envoi (120) est configurée pour envoyer un élément de commande, CE, de contrôle d'accès au support, MAC, sur au moins une porteuse de la pluralité de porteuses, le CE MAC comprenant une charge utile, et les informations de réponse étant transportées dans la charge utile.
